# EUROPEAN PATENT APPLICATION

(11) **EP 2 731 407 A2**
(43) Date of publication of application: **14.05.2014**
(21) Application number: 13177403.6
(22) Date of filing: 22.07.2013
(51) Int. Cl.: H05B 33/08

(54) **Lighting control device and lighting control system**

(30) Priority: 13.11.2012 JP 2012249595
(71) Applicant: Toshiba Lighting & Technology Corporation, Yokosuka-shi Kanagawa 237-8510 (JP)
(72) Inventor: Ukai, Tomoyuki, Yokosuka-shi, Kanagawa 237-8510 (JP)
(74) Representative: Bokinge, Ole

(57) **Abstract**

A lighting control device (2) displays a plurality of graphics (3a) of a plurality of lighting devices (3) on a screen of a monitor (12) in correspondence with an installation layout of the plurality of lighting devices (3) having a color control function, and displays a color indicator (35) by superimposing the color indicator on the screen using a created or selected color. The device allocates a color of the color indicator (35) displayed on the screen to all or a part of the plurality of graphics (3a) displayed on the screen, for each scene, displays a thumbnail of the plurality of graphics (3s) in corresponding to the installation layout of the plurality of lighting devices (3) using the color allocated by the color allocation unit Information on the color allocated to each of the graphics (3a) by the color allocation unit is stored in a storage device (14), for each scene.

## Description

### FIELD

Embodiments described herein relate generally to a lighting control device and a lighting control system.

### BACKGROUND

In the related art, a lighting control device for controlling a plurality of lighting devices arranged in television studios, theatres and halls is widely used.

For example, a dimming level of the respective lighting devices is set for each scene of a recording program in the television studios, and for each stage scene in the stage lighting. The lighting control device stores information on the set dimming level, and performs dimming of the respective lighting devices for each scene based on the stored information. An operator, while checking lighting conditions on an actual stage and operating a fader and the like which are disposed on a control console of the lighting control device, sets the dimming level of the respective lighting devices for each scene.

The respective lighting devices emit a predetermined illumination light beam of one color, for example, the illumination light beam of any one of colors among RGB. Therefore, color rendering for each scene is performed by setting the dimming level of a plurality of the lighting devices emitting the illumination light beam of any one color among RGB. Accordingly, when a certain lighting area is illuminated by the illumination light beams of a plurality of the lighting devices, it is possible to illuminate the lighting area with the illumination light beam of a desired color by adjusting the dimming level of the lighting devices.

Recently, in order to improve work efficiency in a dimming control console for setting the dimming level, a dimming control device is also proposed which can selectively and intuitively operate the lighting devices on a monitor screen by using a touch panel.

In addition, in recent years, the lighting devices having no single color in the illumination light beams and capable of color rendering are put to practical use.

However, in the lighting control device in the related art, the illumination light beams of a desired color are created by setting the dimming or color rendering level of the respective lighting devices for each scene. Thus, the control console needs to set a value of each output level for red, green or blue, for example, and requires complicated and difficult setting work for the dimming and color rendering.

Furthermore, an operator can check conditions of a light output by specifying the scene number and operating a plurality of the lighting devices using the color rendering level information set for the respective lighting devices. However, the setting content is checked by displaying a numerical value of the dimming and color rendering level for the respective lighting devices on a screen of a display device. Therefore, the operator cannot grasp the dimming and color rendering level for the respective lighting devices only by the numerical value of the setting value, thereby having some difficulties in checking the setting state of the light output of a plurality of the lighting devices.

### BRIEF DESCRIPTION OF THE DRAWINGS

FIG. 1 illustrates a configuration diagram of a lighting control system.
FIG. 2 illustrates an example of installation layout of a plurality of lighting devices 3 installed on a ceiling in a television studio.
FIG. 3 is a block diagram illustrating a configuration of a lighting control device.
FIG. 4 is a flowchart illustrating an example of a process flow in setting a dimming level and color rendering information for each lighting device.
FIG. 5 illustrates an example of a setting screen.
FIG. 6 illustrates an example of a setting screen to describe selection of a lighting device.
FIG. 7 illustrates another example of a setting screen to describe selection of a lighting device.
FIG. 8 illustrates an example of a setting screen to describe individual brightness setting.
FIG. 9 illustrates another example of a setting screen to describe individual brightness setting.
FIG. 10 illustrates an example of a setting screen where a thumbnail image is added to a thumbnail display unit 33.
FIG. 11 illustrates an example of a setting screen showing a state where three scene thumbnails SN1 to SN3 are added to a thumbnail display unit.
FIG. 12 is a flowchart illustrating an example of a reproduction process flow for each scene.
FIG. 13 illustrates an example of a setting screen showing a state where a scene thumbnail SN2 is selected.

### DETAILED DESCRIPTION

A lighting control device of an embodiment includes a lighting device layout display unit that displays a plurality of graphics of a plurality of lighting devices on a screen of a display device in correspondence with an installation layout of the plurality of lighting devices having a color control function; a color indicator display unit that displays a color indicator by superimposing the color indicator on the screen using a created or selected color; a color allocation unit that allocates a color of the color indicator displayed on the screen to all or a part of the plurality of graphics displayed on the screen, for each scene; a for-each-scene thumbnail display unit for the each scene that displays a thumbnail of the plurality of graphics in correspondence with the installation layout of the plurality of lighting devices using the color allocated by the color allocation unit, for each scene; and a scene information storage unit that stores information on the color allocated to each of the graphics by the color allocation unit in a storage device, for each scene.

Hereinafter, embodiments will be described with reference to the accompanying drawings.

### (Configuration)

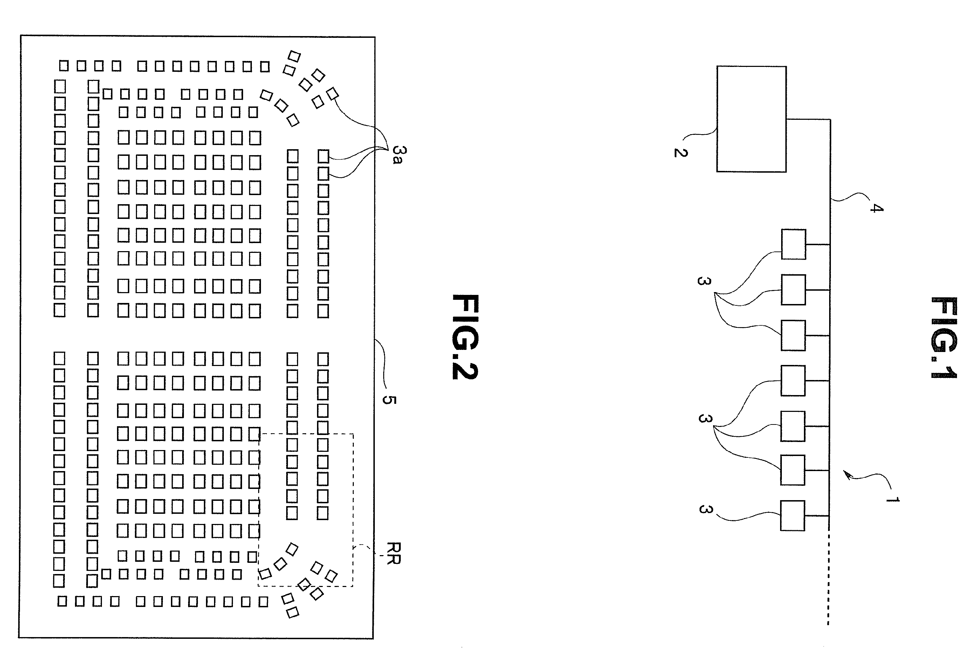

FIG. 1 illustrates a configuration diagram of a lighting control system according to this embodiment. A lighting control system 1 includes a lighting control device 2 as a center device and a plurality of lighting devices 3. The lighting control device 2 and the plurality of lighting devices 3 are connected to each other by a communication line 4. The lighting control system 1 is installed in television studios, theaters and halls. The lighting control device 2 can perform on-off control, dimming and color rendering of each of the lighting devices 3. Hereinafter, an example of the lighting control system 1 used in illuminating a television studio will be described.

Each of the lighting devices 3 is a lighting device having a color control function, and in this case, includes four types of light-emitting diodes (LEDs) emitting illumination light beams of four colors, for example, four types of LEDs for four colors where W (white) is added to three colors, RGB (Red, Green and Blue). That is, each of the lighting devices 3 is a color LED device, and capable of emitting illumination light beams of a desired color. Furthermore, each of the lighting devices 3 includes a signal reception unit connected to the communication line 4, a switching device for the respective LEDs, and a control unit including a microcomputer which generates and outputs PWM (pulse width modulation) signals of the respective LEDs, and controls an output of the switching device for the respective LEDs.

Here, each of the lighting devices 3 emits the illumination light beams using the colors of RGBW, but may emit the illumination light beams using the other colors such as a white color and an amber color.

Each of the lighting devices 3 is attached to a ceiling of a stage, and controls a light emitting level in the respective four types of LEDs, based on a control signal received from the lighting control device 2 via the communication line 4.

In FIG. 1, a power supply line to each of the lighting devices 3 is not illustrated.

Furthermore, herein, the lighting control device 2 is connected to the plurality of lighting devices 3 by the bus type communication line 4, but the connection between the lighting control device 2 and the plurality of lighting devices 3 may be made by another type communication line except for the bus type, such as a ring type and a star type.

FIG. 2 illustrates an example of installation layout of the plurality of lighting devices 3 installed on a ceiling in a television studio. In theaters and halls, FIG. 2 illustrates the installation layout on a stage. FIG. 2 illustrates the installation layout for the plurality of lighting devices 3 on a rectangular studio 5 illustrated in a plan view. Each of the lighting devices 3 is illustrated by graphics 3a so as to correspond to the attachment positions. As will be described below, a screen of a display device of the lighting control device 2 displays the installation layout of the plurality of lighting devices illustrated in FIG. 2.

Then, the lighting control device 2 has correspondence information which associates each of the lighting devices 3 with the graphics 3a of the lighting devices on a setting screen.

The lighting control device 2 sets the brightness and colors of the illumination light beams for each of the lighting devices 3 corresponding to each scene of a television program to be recorded on the studio 5. As will be described below, the setting of the dimming information and the color rendering information are performed on the setting screen displayed on the display device of the lighting control device 2.

Accordingly, based on the dimming information and the color rendering information which are set with regard to the respective graphics 3a, and the correspondence information between the lighting devices 3 and the graphics 3a, the lighting control device 2 can control the dimming (including switching on and off) and the color rendering of the lighting devices 3 corresponding to the respective graphics 3a.

In FIG. 2 and the other drawings, each of the lighting devices 3 is illustrated on the screen of the display device of the lighting control device 2 by using the simple rectangular graphics 3a, but each of the lighting devices 3 may be illustrated by using a graphic having a shape similar to the shape thereof or may be displayed together with the name of the lighting devices.

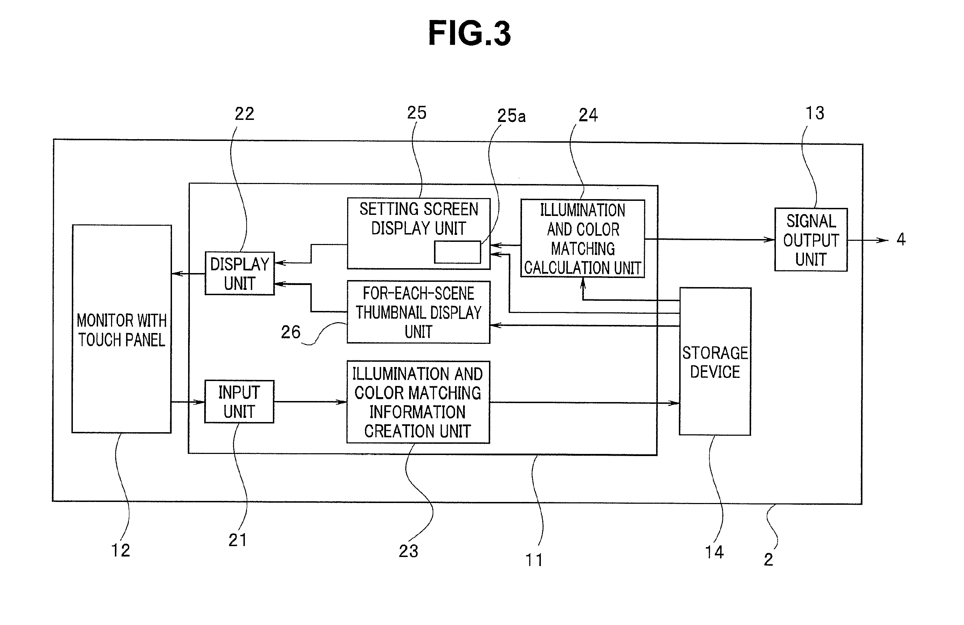

FIG. 3 is a block diagram illustrating a configuration of the lighting control device 2.

The lighting control device 2 is a control console configured to include a control unit 11, a monitor 12 with a touch panel as the display device, a signal output unit 13 connected to the communication line 4, and a storage device 14. In addition, the lighting control device 2 has an input device including various buttons (not illustrated), and enables an operator to input various commands.

The control unit 11 is configured to include an input unit 21, a display unit 22, a dimming and color rendering information creation unit 23, a dimming and color rendering calculation unit 24, a setting screen display unit 25 and a for-each-scene thumbnail display unit 26. These functional units inside the control unit 11 are realized by hardware or software.

The control unit 11 includes a central processing unit (CPU), a ROM and a RAM, and when receiving the command from the monitor 12 with the touch panel as an operation unit, reads out a program corresponding to the command from the ROM or the storage device 14 to execute the program, thereby realizing the function corresponding to the command.

The monitor 12 is a display device with a touch panel, displays a screen generated by the control unit 11 on the display device, and outputs positional information specified through the touch panel.

The input unit 21 is a processing unit that inputs the positional information from the monitor 12 and interprets the content of the command by using the content of the display on the screen of the monitor 12 and the positional information thereof.

The display unit 22 is a processing unit that generates and outputs the display information to the monitor 12.

The dimming and color rendering information creation unit 23 is a processing unit that creates the commanded dimming information and color rendering information, based on the information from the input unit 21. As will be described below, the dimming and color rendering information creation unit 23 creates the dimming and color rendering information, based on the positional information of an operator's operation on the touch panel, and stores the information in the storage device 14.

The dimming and color rendering calculation unit 24 is a processing unit that calculates and creates the color of the graphics 3a displayed on the screen and the control signal to be sent to each of the lighting devices 3, based on the dimming information and color rendering information of each of the lighting devices 3, which are stored in the storage device 14.

The setting screen display unit 25 is a processing unit that generates and outputs a setting screen including the installation layout stored in the storage device 14. The setting screen display unit 25 includes a color indicator display unit 25a. The color indicator display unit 25a is a processing unit that displays a color indicator (to be described below) by superimposing the color indicator on the setting screen.

The for-each-scene thumbnail display unit 26 is a processing unit that generates and outputs an image of thumbnails of the installation layout stored in the storage device 14.

The signal output unit 13 is an interface circuit that outputs the control signal for each of the lighting devices 3 to the communication line 4.

The storage device 14 is a flash memory or a hard disk device. The storage device 14 stores the information on the installation layout, the dimming information and color rendering information for each scene, and the information on the duration of each scene. That is, the storage device 14 stores the information on the installation layout, the dimming information and color rendering information of each of the lighting devices 3 and the duration, for each scene corresponding to the number of the scene.

### (Operation)

First, setting the brightness and the color of each of the lighting devices 3 for each scene will be described.

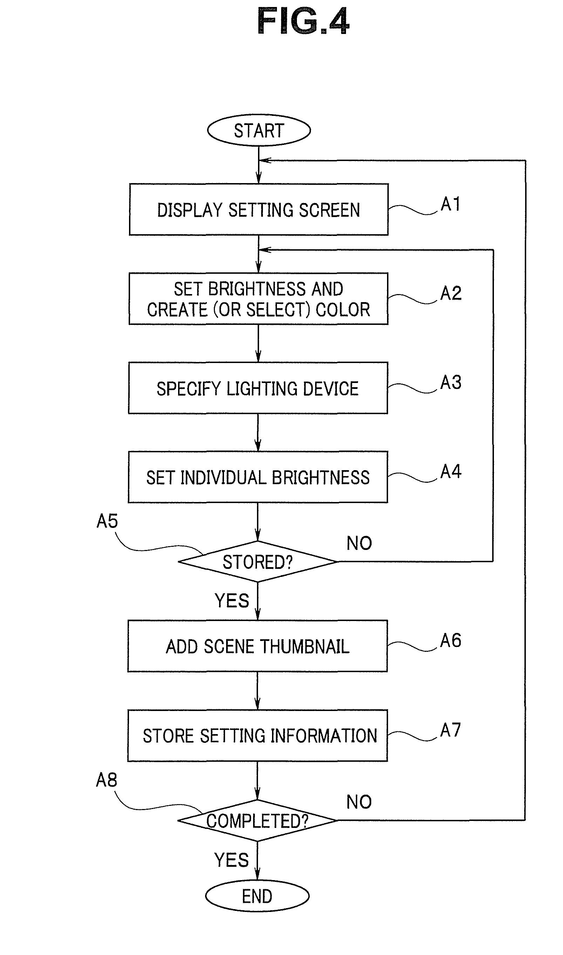

FIG. 4 is a flowchart illustrating an example of a process flow in setting a dimming level and color rendering information for each of the lighting device 3. The process in FIG. 4 is performed by the control unit 11.

If an operator operates a predetermined button (not illustrated) of the input device, a process starts for setting the brightness and the color of each of the lighting devices 3 for each scene in FIG. 4.

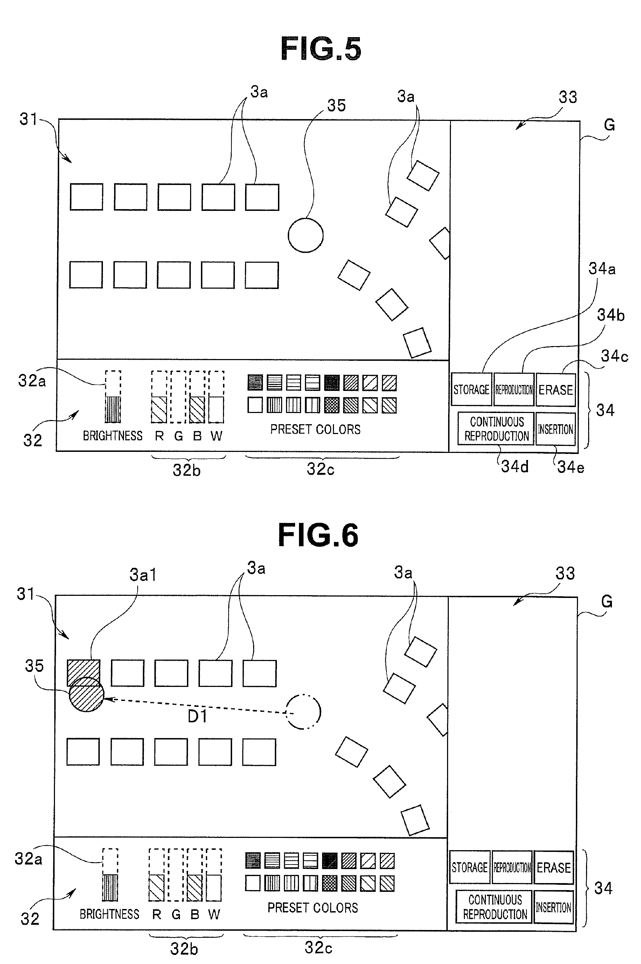

First, the control unit 11, if a predetermined button thereof is pressed, reads out the information on the installation layout illustrated in FIG. 2, which is stored in the storage device 14, and displays the setting screen illustrated in FIG. 5 on the screen of the monitor 12 (Act 1). The process in Act 1 corresponds to the setting screen display unit 25. That is, the process in Act 1 corresponds to the installation layout of the plurality of lighting devices 3 having a color control function, thereby configuring a lighting device layout display unit that displays the plurality of graphics 3a of the plurality of lightning fixtures 3 on the screen of the monitor 12 which is the display device.

A configuration of a setting screen G will be described. FIG. 5 illustrates an example of the setting screen. The setting screen G includes a layout display unit 31, a setting information input unit 32, a thumbnail display unit 33 and an operation command unit 34.

The layout display unit 31 is a display region which displays the installation layout of the plurality of lighting devices 3 in the studio or the stage illustrated in FIG. 2, based on the information on the installation layout read out from the storage device 14.

In the initial setting screen G, the layout display unit 31 displays the overall layout of the studio illustrated in FIG. 2. An operator can change and specify a range to be displayed on the layout display unit 31, in the installation layout in FIG. 2, by means of a pinch operation of stretching or contracting two or more fingers toward the touch panel, or enlargement and contraction functions of the screen using the button operation. In a case of FIG. 5, the layout display unit 31 displays an enlarged region RR of the installation layout illustrated by the dotted line in FIG. 2.

Furthermore, the layout display unit 31 displays a color indicator 35 having a preset brightness in a circular mark by using a created or selected color. As will be described below, the color indicator display unit 25a displays the color indicator 35 on the layout display unit 31 by using the brightness set by the setting information input unit 32 and the created or selected color.

An operator moves the color indicator 35 on the screen by touching the color indicator 35 with a finger or a pen tip. That is, the color indicator 35, if dragged, moves along the drag operation on the screen. The drag operation is performed on the touch panel disposed on the monitor 12. Accordingly, the operator can move the color indicator 35 by the drag operation on the screen.

Herein, the color indicator 35 is a circular mark, but may have a rectangular or triangular shape in addition to the circular shape, and may be icons or cursors having further various shapes.

Accordingly, the process in Act 1 includes the color indicator display unit 25a that displays the color indicator 35 by superimposing the color indicator 35 on the screen by using a preset brightness and a created or selected color. That is, the color indicator display unit 25a displays the color indicator 35 by using the preset brightness and color.

The setting information input unit 32 includes a first bar display unit 32a for setting the brightness, a second bar display unit 32b for setting the brightness of each color among RGBW, and a color palette display unit 32c for selecting one from a plurality of colors prepared in advance. The color palette display unit 32c includes rectangular graphics having a plurality of colors.

An operator of the lighting control device 2 can change the brightness of the color indicator 35 in the following manner. If the operator's finger moves the bar display unit 32a upward by touching the bar display unit 32a on the screen of the monitor 12 with the touch panel, the bar is stretched to strengthen the brightness of the color indicator 35. In contrast, if the operator's finger moves the bar display unit 32a downward, the bar is contracted to weaken the brightness of the color indicator 35, and thus the brightness of the color indicator 35 can be changed.

Furthermore, if the operator's finger or pen moves the bar display unit 32b upward by touching the bar display unit 32b on the screen of the monitor 12 with the touch panel, the bar is stretched to strengthen the brightness of the color of the touched bar in the color indicator 35. In contrast, if the operator's finger or pen moves the bar display unit 32b downward, the bar is contracted to weaken the brightness of the color of the touched bar in the color indicator 35. In this manner, the operator can change the brightness of each color among RGBW.

Accordingly, the operator can adjust the length of each color in the bar display unit 32b and consequently can create the color of the color indicator 35 such that the color indicator 35 has a desired color. Therefore, the color indicator 35 is displayed by the color created using a plurality of color bars having a predetermined color, which is displayed on the screen.

In addition, the operator can change the color of the color indicator 35 to the color of the touched rectangular graphic even by selecting the color after touching the rectangular graphic out of the color palette display unit 32c on the screen of the monitor 12 with the touch panel. Accordingly, the color indicator 35 can be displayed by using the color selected in the color palette display unit 32c displayed on the screen.

The dimming level changed by the operator in the bar display unit 32a is reflected on the color indicator 35. Furthermore, the color changed and created by the operator in the bar display unit 32b, or the color selected from the color palette display unit 32c is reflected on the color indicator 35.

That is, the brightness and color of the color indicator 35 is changed to the brightness and color set to be changed by the operator in the setting information input unit 32 in conjunction with the change operation in real time. For example, if the operator sets the level of the brightness in the bar display unit 32a to 50%, the color indicator 35 is displayed by using the brightness (that is, luminance) of half the predetermined maximum level. If the level of the brightness is set to 100%, the color indicator 35 is displayed by using the brightness of the predetermined maximum level. If the dimming level is set to 0%, the color indicator 35 is displayed by using the brightness of a zero level (that is, turned off). Furthermore, the color indicator 35 is displayed by using the color where the level of the bar of each color is changed and created by the operator in the bar display unit 32b, or the color indicator 35 is displayed by using the color selected from the color palette display unit 32c.

Accordingly, the operator can change conditions of the color and brightness which are created or selected while observing the conditions of the color indicator 35.

The thumbnail display unit 33 in FIG. 5 is a region for displaying a thumbnail image (to be described below).

An operation command unit 34 is a region for displaying buttons of various commands. For example, the buttons of the operation command unit 34 includes a storage button 34a, a reproduction button 34b, an erase button 34c, a continuous reproduction button 34d and an insertion button 34e.

Herein, the respective buttons such as the storage button 34a and the reproduction button 34b are displayed by using rectangular marks with characters, but may be displayed by using graphics without characters, icons or the like.

Referring back to FIG. 4, if the setting screen is displayed on the monitor 12 by Act 1, the operator utilizes the above-described setting information input unit 32, changes the brightness of the color indicator 35, and creates or selects the color. The operator operates the respective bar display units 32a and 32b and the color palette display unit 32c of the setting information input unit 32, and sets the brightness and color of the color indicator 35 as described above. Accordingly, the control unit 11 sets the brightness and creates (or selects) the color (Act 2).

Next, the operator specifies the lighting device emitting the illumination light beam having the brightness and color to be displayed on the color indicator 35. Accordingly, the control unit 11 performs a specification process of the lighting device (Act 3).

As described above, the operator can drag and move the color indicator 35 on the screen. If the operator moves the color indicator 35 to a position of the graphic 3a of a certain lighting device by using the drag operation, and the color indicator 35 and the graphic 3a are at least partially overlapped with each other, the graphic 3a is displayed by using the brightness and color of the color indicator 35. That is, the drag operation of the color indicator 35 allows the specification of the lighting device 3 emitting the illumination light beam having the brightness and color of the color indicator 35. At this time, even if the lighting device is in a state of being capable of emitting the illumination light beam, the illumination light beam is not emitted.

Even if the color indicator 35 is not dragged, if the operator touches the graphic 3a within the layout display unit 31, the touched graphic 3a may be caused to be displayed by using the brightness and color of the color indicator 35.

FIG. 6 illustrates an example of the setting screen to describe selection of the lighting device. As illustrated in FIG. 6, the color indicator 35 is dragged and moved to a position of the graphic 3a1 as illustrated by a dotted line D1. In this manner, the graphic 3a1 is also set and changed to have the same brightness and color as those of the color indicator 35.

Furthermore, as illustrated in FIG. 6, if the color indicator 35 is moved to a position of one graphic 3a of the target lighting device 3, it is possible to set the graphic 3a to have the same brightness and color as those of the color indicator 35. Moreover, if the color indicator 35 is dragged so as to touch a plurality of graphics 3a, it is possible to set and change the plurality of touched graphics 3a to have the same brightness and color as those of the color indicator 35.

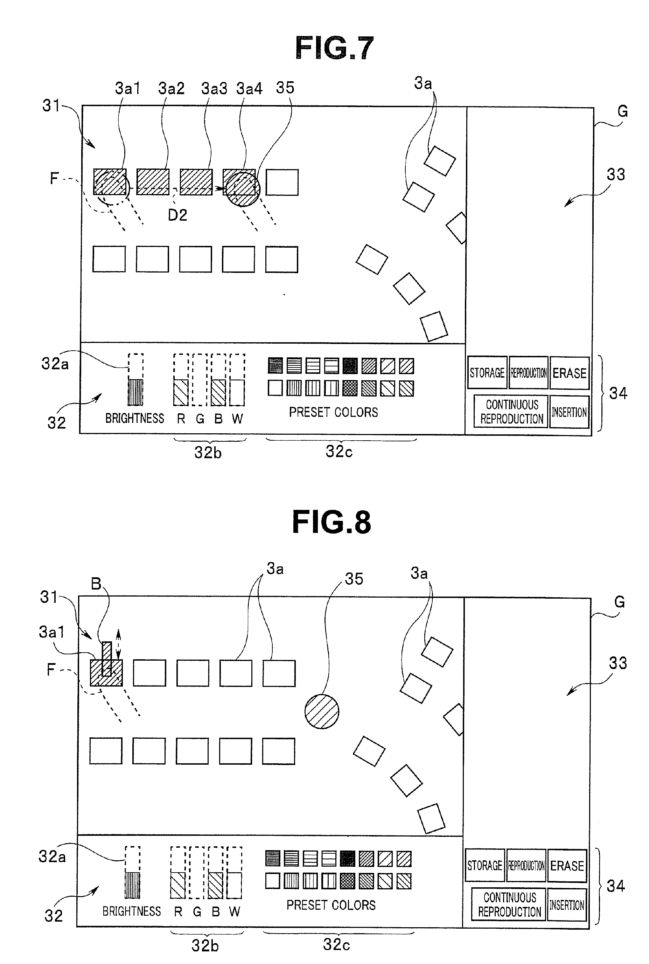

FIG. 7 illustrates another example of the setting screen to describe selection of the lighting device. As illustrated in FIG. 7, the operator drags the color indicator 35 from the position of the graphic 3a1 to a position of a graphic 3a4 by using a finger F as illustrated by a dotted line D2. In this manner, the graphics 3a1 to 3a4 are changed to have the same brightness and color as those of the color indicator 35.

That is, in Act 3 configuring the color allocation unit, the brightness and color of the color indicator 35 is allocated to one or more graphics 3a overlapped with the color indicator 35 when the color indicator 35 is in the drag operation on the screen of the monitor 12.

This method is convenient since it is possible to set the same brightness and the same color for the plurality of graphics 3a by using the drag operation once.

As described above, the process in Act 3 is performed by the dimming and color rendering information creation unit 23, and configures the color allocation unit that allocates the color indicator 35 displayed on the screen to all or a part of the plurality of graphics displayed on the screen, for each scene.

Furthermore, the operator can individually change the brightness of the graphic 3a1 by touching the monitor 12 with the touch panel. Accordingly, the control unit 11 performs an individual setting process of the brightness (Act 4).

FIG. 8 illustrates an example of the setting screen to describe the individual setting of the brightness. For example, if the operator touches the graphic 3a1 on the screen, which needs to be changed, by using the finger F, a bar display B as illustrated in FIG. 8 is displayed. As illustrated by the dotted arrow, if the operator moves the finger F upward while touching the graphic 3a1 on the screen, the bar display B is extended. If the finger F is moved downward, the bar display B is contracted.

If the bar display B is extended, the brightness of the color indicator 35 is strengthened, and if the bar display B is contracted, the brightness of the color indicator 35 is weakened. That is, it is possible to change the brightness (that is, luminance) of the color indicator 35 by changing the bar display B. At this time, if the selected lighting device is in a state of being capable of emitting the illumination light beam, the illumination light beam is emitted in conjunction with the screen.

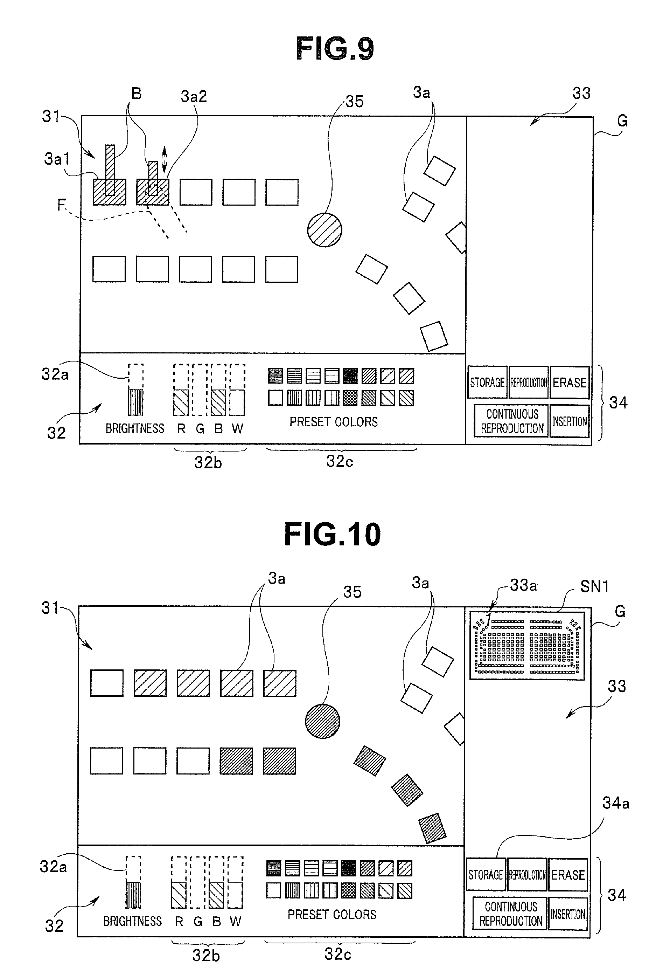

After the operator displays the bar display B of the graphic 3a1 of the lighting device 3 and changes the brightness of the graphic 3a1, the operator can also similarly change the luminance of the graphic 3a2 by touching another graphic, for example the graphic 3a2. FIG. 9 illustrates another example of the setting screen to describe the individual setting of the brightness. As illustrated in FIG. 9, the operator can also adjust the brightness of the graphic 3a2 similarly to the graphic 3a1.

The process in Act 4 is performed by the command of the operator, and thus may not be performed in some cases.

As described above, the process in Act 4 configures an individual brightness change unit that displays the predetermined bar display B by superimposing the bar display B on the selected graphic on the screen, and while the length of the predetermined bar display B which is displayed can be changed, changes the brightness of the selected graphic corresponding to the length of the bar.

The operator can perform the processes from Act 2 to Act 4 described above until the operator touches, that is, switches on the storage button 34a of the operation command unit 34. Accordingly, the operator can perform the setting related to the brightness and color for the graphic 3a of the respective lighting devices 3 on the installation layout. The processes in Act 2 to Act 4 correspond to the dimming and color rendering information creation unit 23.

The control unit 11 determines whether the operator touches the storage button 34a and commands the storage (Act 5), and if the storage is not commanded (Act 5: No), the process returns to Act 2.

If the storage is commanded (Act 5: Yes), the control unit 11 generates a thumbnail image of the screen displayed on the layout display unit 31, gives the image a scene number, and additionally displays the generated scene thumbnail image on the thumbnail display unit 33 (Act 6). The control unit 11 manages the scene number and gives a new scene the scene number through the increment in the scene number of the maximum value by one. The process in Act 6 corresponds to the for-each-scene thumbnail display unit 26.

FIG. 10 illustrates an example of the setting screen where the thumbnail image is added to the thumbnail display unit 33. As illustrated in FIG. 10, if the storage button 34a is touched, that is, switched on, the control unit 11 generates the entire thumbnail image of the installation layout including the graphic 3a displayed on the layout display unit 31, and as a scene thumbnail SN1, adds the thumbnail image to the thumbnail display unit 33 together with a scene number 33a (here, scene 1).

The respective graphics 3a within the scene thumbnail SN1 are displayed by using the set brightness and color. Accordingly, the operator can grasp setting conditions of the scene 1 by checking the entire brightness and tone of the scene thumbnail SN1.

That is, the process in Act 6 configures the for-each-scene thumbnail display unit 26 that displays the thumbnail of the plurality of graphics 3a for each scene, corresponding to the installation layout of the plurality of lighting devices 3, by using the brightness and color allocated by the color allocation unit.

Then, the control unit 11 causes the information on the set brightness and color to correspond to the scene number for each graphic 3a of the respective lighting devices 3 displayed on the layout display unit 31, and stores the information in the storage device 14 as the setting information (information on the brightness and color) of the respective lighting devices 3 (Act 7). Accordingly, the process in Act 7 configures the scene information storage device that stores the information on the brightness and color which are created by the dimming and color rendering information creation unit 23 and allocated to the respective graphics 3a for each scene by the color allocation unit, in the storage device 14.

The control unit 11 determines whether the completion of the setting process is commanded or not by checking whether or not an operation to command the completion of the setting process is made, for example, a predetermined button (not illustrated) of the input device is operated (Act 8).

If the completion of the setting process is not commanded (Act 8: No), the process returns to Act 1, and the operator can perform the setting process for the next scene. If the completion of the setting process is commanded (Act 8: Yes), the process ends.

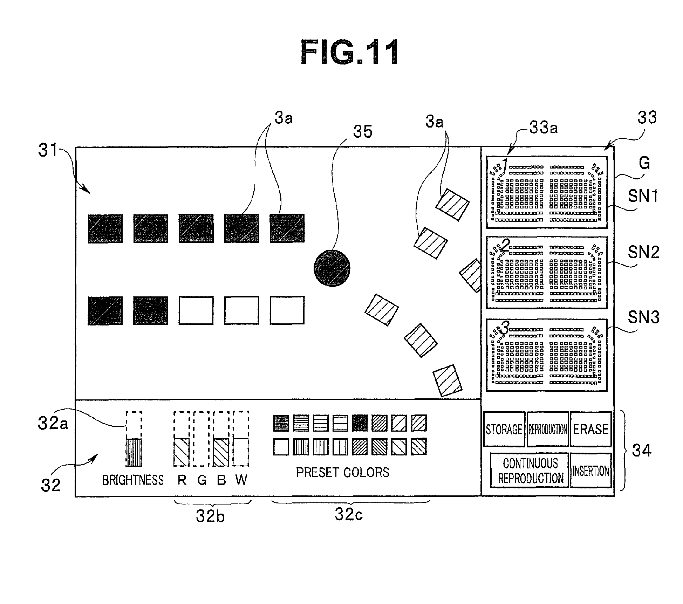

Therefore, the processes from Act 1 to Act 7 are repeated to generate a plurality of thumbnail images for each scene, which are added to the thumbnail display unit 33 together with the scene number 33a. FIG. 11 illustrates an example of the setting screen showing a state where three scene thumbnails SN1 to SN3 are added to the thumbnail display unit 33.

In the above-described manner, the operator can easily and intuitively set the brightness and color of the respective lighting devices 3 for each scene.

Next, a scene reproduction process will be described.

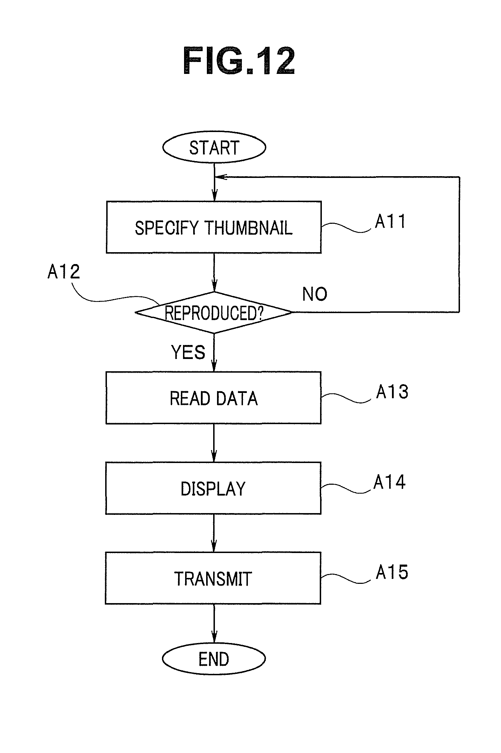

FIG. 12 is a flowchart illustrating an example of a reproduction process flow for each scene. The process in FIG. 12 is performed by the control unit 11.

If the operator operates a predetermined button (not illustrated) of the input device, the process in FIG. 12 starts. When the reproduction process is commanded, the setting screen G as illustrated in FIG. 11 is displayed on the monitor 12.

First, if the operator selects one from the plurality of scene thumbnails displayed on the thumbnail display unit 33 on the monitor 12, the control unit 11 specifies the selected scene thumbnail (Act 11). That is, the control unit 11 can specify the selected scene from the scene thumbnail selected by the operator.

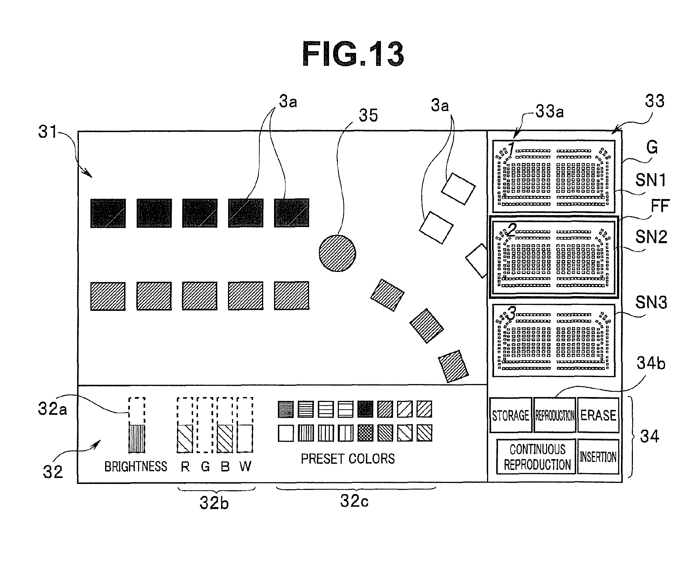

FIG. 13 illustrates an example of the setting screen showing a state where the scene thumbnail SN2 is selected. The selected scene thumbnail SN2 has a superimposed thick frame FF, and thus the selected scene thumbnail can be identified by the operator.

The control unit 11 determines whether or not the reproduction button 34b is switched on (Act 12), and if the button is not switched on (Act 12: No), the process returns to Act 11. If the reproduction button 34b is switched on (Act 12: Yes), the control unit 11 reads out the information on the brightness and color of the respective graphics 3a in the scene thumbnail SN2 stored in the storage device 14, and the change time from the start to the end of the change in the brightness which is stored simultaneously (Act 13), and starts to display the respective graphics 3a on the layout screen of the setting screen G by using the set brightness and color (Act 14).

At the same time, the control unit 11 calculates and obtains control data to control the respective lighting devices 3 corresponding to the respective graphics 3a, based on the information on the brightness and color of the respective lighting devices 3a, and transmits the control data from the signal output unit 13 (Act 15).

In Act 14 and Act 15, the dimming and color rendering calculation unit 24 generates display data on the setting screen G and the control data to control the respective lighting devices 3. The display data is output to the setting screen display unit 25, and the respective graphics 3a on the setting screen G is displayed by using the brightness and color included in the display data. The control data is output to the signal output unit 13 and transmitted to the respective lighting devices 3. The respective lighting devices 3 emit the illumination light beam based on the information on the brightness and color which is included in the received control data. The illumination light beam emitted by the respective lighting devices 3 eventually has the brightness and color which are equal to or similar to the corresponding graphics 3a on the setting screen G. As described above, since the change time of each scene is also stored in the storage device 14 as scene information, the reproduction time is equal to the change time.

As described above, the process in Act 15 configures the control signal output unit that outputs the control signal to the plurality of lighting devices 3, based on the information on the brightness and color of the plurality of graphics 3a which is stored in the storage device 14.

Accordingly, the operator can easily check the conditions of the dimming and color rendering of the scene while observing the lighting conditions of the scene set on the stage.

In addition, if the operator switches on the continuous reproduction button 34d, the reproduction is sequentially performed from the first scene or the selected scene to the last scene.

Furthermore, the operator can erase the selected scene thumbnail by switching on the erase button 34c. Further, the operator can insert a newly set scene thumbnail to the front position of the selected scene (alternatively, the rear position may be adapted) by switching on the insertion button 34e.

That is, the operator can set the information on the dimming and color rendering of the respective lighting devices 3 for each scene by setting the brightness and color of graphics 3a corresponding to the respective lighting devices 3, and can add the display of the scene thumbnail to the setting screen G. Furthermore, the operator can select the scene thumbnail and can reproduce or continuously reproduce the scene thumbnail so as to control the respective lighting devices 3 based on the information on the brightness and color of the respective graphics 3a registered in the storage device 14.

As described above, according to the embodiments, it is possible to provide the lighting control device which can easily and intuitively set the color rendering and can easily check the conditions of setting the color rendering of the plurality of lighting devices 3 for each scene.

In the example described above, the lighting device 3 are described as a color LED, but the lighting device 3 may be color lighting devices using a laser diode, color lighting devices using an organic EL or roll type color changers.

Furthermore, in the example described above, the operator can command the device by using the monitor 12 with the touch panel and touching on the screen of the monitor 12. However, a mouse or a trackball may be used as the input device to perform the various setting or selection.

In addition, as a computer program product, a program code for executing the above-described operation is recorded or stored entirely or partially in a portable medium such as a flexible disk and CD-ROM or a non-temporary computer readable medium of a storage medium such as a hard disk. The program is read out by a computer and thus the operation is entirely or partially executed. Alternatively, it is possible to entirely or partially distribute or provide the program via a communication network. A user can easily obtain the lighting control device of the embodiment by installing the program downloaded via the communication network in the computer or by installing the program from the recording medium in the computer.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A lighting control device comprising:
a lighting device layout display unit (25) that displays a plurality of graphics of a plurality of lighting devices on a screen of a display device in correspondence with an installation layout of the plurality of lighting devices having a color control function, and;
a color indicator display unit (25a) that displays a color indicator (35) by superimposing the color indicator on the screen using a created or selected color;
a color allocation unit (23) that allocates a color of the color indicator displayed on the screen to all or a part of the plurality of graphics displayed on the screen, for each scene;
a for-each-scene thumbnail display unit (26) that displays a thumbnail of the plurality of graphics in corresponding to the installation layout of the plurality of lighting devices using the color allocated by the color allocation unit, for each scene; and
a scene information storage unit (23) that stores information on the color allocated to each of the graphics by the color allocation unit in a storage device, for each scene.

2. The device according to claim 1,
wherein the color allocation unit (23) allocates the color of the color indicator to one or more of the graphics superimposed on the color indicator when the color indicator is drag-operated on the screen of the display device.

3. The device according to claim 1 or 2,
wherein the color indicator display unit (25a) displays the color indicator using brightness which is set,
the color allocation unit (23) allocates the brightness of the color indicator displayed on the screen to the plurality of graphics displayed on the screen, and
the scene information storage unit stores the information on the brightness allocated to the plurality of graphics in the storage device.

4. The device according to claim 3, further comprising:
a brightness change unit that displays a predetermined bar display corresponding to a graphic selected on the screen, is capable of changing a length of a bar in the predetermined bar display, and changes the brightness of the selected graphic.

5. The device according to claim 3, further comprising:
a control signal output unit that outputs a control signal to the plurality of lighting devices, based on the information on the brightness and information on the color with regard to the plurality of graphics, which are stored in the storage unit, in the selected scene.

6. The device according to any one of claims 1 to 5,
wherein the plurality of lighting devices are color LED devices.

7. The device according to claim 2,
wherein the drag-operation is an operation performed on a touch panel disposed in the display device.

8. The device according to any one of claims 1 to 7,
wherein the color indicator display unit displays the color indicator using the selected color in a color palette displayed on the screen.

9. The device according to any one of claims 1 to 8,
wherein the color indicator display unit displays the color indicator using a color created by a plurality of color bars of a predetermined color, which are displayed on the screen.

10. A lighting control system, comprising:
a plurality of lighting devices; and
the lighting control device according to any one of claims 1 to 8, which is connected to the plurality of lighting devices by a communication line.
